(19) Europäisches Patentamt / European Patent Office / Office européen des brevets

(11) EP 4 692 226 A1

(12) # EUROPEAN PATENT APPLICATION

published in accordance with Art. 153(4) EPC

(43) Date of publication:
**11.02.2026 Bulletin 2026/07**

(21) Application number: **24784852.6**

(22) Date of filing: **29.03.2024**

(51) International Patent Classification (IPC):
***C08L 29/04*** *(2006.01)* ***C08F 16/06*** *(2006.01)*
***C08F 216/06*** *(2006.01)* ***C08K 5/00*** *(2006.01)*

(52) Cooperative Patent Classification (CPC):
**C08F 16/06; C08F 216/06; C08K 5/00; C08L 29/04**

(86) International application number:
**PCT/JP2024/013188**

(87) International publication number:
**WO 2024/210066 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 JP 2023062348**

(71) Applicant: **Kuraray Co., Ltd.**
**Kurashiki-shi, Okayama 710-0801 (JP)**

(72) Inventors:
- **OKAMOTO, Yuji**
  **Bangkok 10500 (TH)**
- **SEKI, Michinari**
  **Kurashiki-shi, Okayama 713-8550 (JP)**

(74) Representative: **Müller-Boré & Partner Patentanwälte PartG mbB**
**Friedenheimer Brücke 21**
**80639 München (DE)**

(54) **SOLUTION, DISPERSANT, METHOD FOR PRODUCING VINYL COMPOUND POLYMER, AND METHOD FOR PRODUCING SOLUTION**

(57) Provided is: a solution that is, irrespective of alcohol content, highly stable and is superior in performance as a dispersant for suspension polymerization; and a method for producing such a solution. The solution comprises: a vinyl alcohol polymer (A) having a degree of saponification of 30 mol% or more and 80 mol% or less and having a degree of polymerization of 100 or more and 700 or less; a compound (B); and an alcohol (C), wherein the compound (B) is a compound represented by the following formula (1). In the formula (1): X represents an oxygen atom or the like. Y represents a group having 1 to 10 carbon atoms. Z represents one selected from the group consisting of a carboxy group, a sulfo group, a phosphoric acid group, a salt thereof, and an anion thereof. $R^1$ represents an acyl group or a hydrocarbon group.

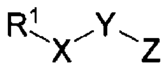

(1)

EP 4 692 226 A1

## Description

[TECHNICAL FIELD]

The present invention relates to a solution, a dispersant, a method for producing a vinyl compound polymer, and a method for producing a solution.

[BACKGROUND ART]

Polyvinyl alcohol polymers (hereinafter, may be also referred to as "PVAs") are known as water-soluble synthetic polymers. PVAs are used for a variety of intended usages such as: materials of films and fibers; additives for paper processing and fiber processing; adhesives; dispersants for emulsion polymerization and suspension polymerization (may be also referred to as "dispersion stabilizers", etc.); and binders for inorganic substances.

The PVA may be stored, distributed, sold, or used, etc., in a solution state. In general, solubility of the PVA in water or the like varies depending on its degree of saponification, degree of polymerization, modification species introduced, and the like. Upon storage, use and the like of the PVA as a solution, the solution is required to be highly concentrated and have low viscosity, and to be highly stable, particularly in light of productivity and handleability. Here, according to the prior art, it is known that even a PVA, which is insoluble in water alone, can be made water-soluble by combining with a certain surfactant (see Patent Document 1).

[PRIOR ART DOCUMENTS]

[Patent Documents]

Patent Document 1: Japanese Unexamined Patent Application, Publication No. S53-133252

[SUMMARY OF THE INVENTION]

[Problems to be Solved by the Invention |

By using a certain surfactant, it is possible to increase the solubility of a PVA as described above and enhance the stability of a resultant solution. However, due to being affected from the surfactant, preparation of a solution that is superior in stability and in properties as a dispersant for suspension polymerization has not been attained. On the other hand, according to findings of the present inventors, without using any surfactant, it is possible to prepare a PVA solution that is highly stable and also has favorable performance as a dispersant for suspension polymerization, by using a solvent with a high alcohol content. However, the solution comprising a solvent with a high alcohol content may be accompanied by restrictions on their handling form due to waste liquid treatment and environmental impact, etc.

One object of the present invention is to provide: a solution that is, irrespective of alcohol content, highly stable and is superior in performance as a dispersant for suspension polymerization; and a method for producing such a solution.

Furthermore, another object of the present invention is to provide: a dispersant that is superior in performance as a dispersant for suspension polymerization; and a method for producing a vinyl compound polymer in which such a dispersant is used.

[Means for Solving the Problems]

The above-described objects are achieved by providing any one of the followings.

(1) A solution comprising: a vinyl alcohol polymer (A) having a degree of saponification of 30 mol% or more and 80 mol% or less and having a degree of polymerization of 100 or more and 700 or less; a compound (B); and an alcohol (C), wherein the compound (B) is a compound represented by the following formula (1):

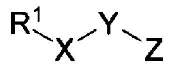 (1)

wherein, in the formula (1): X represents an oxygen atom, a group represented by the following formula (2), or a group represented by the following formula (3); Y represents a group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group,

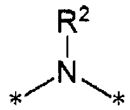 (2)

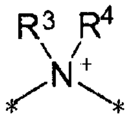 (3)

in the formula (2) and the formula (3): $R^2$, $R^3$, and $R^4$ each independently represent a hydrogen atom, an alkyl group having 1 to 3 carbon atoms, or an atomic bonding that bonds to Y; and * denotes an atomic bonding;

(2) The solution according to (1), wherein a block character of vinyl ester units in the vinyl alcohol polymer (A) is 0.4 or more and 0.6 or less;

(3) The solution according to (1) or (2), wherein a content of the vinyl alcohol polymer (A) is 15% by mass or more;

(4) The solution according to any one of (1) to (3), wherein a content of the compound (B) is 0.5% by mass or more and 10% by mass or less;

(5) The solution according to any one of (1) to (4), wherein a content of the alcohol (C) is 5% by mass or more and 80% by mass or less;

(6) The solution according to any one of (1) to (5), wherein a content of the alcohol (C) is less than 20% by mass;

(7) The solution according to any one of (1) to (6), wherein a content of the compound (B) is 0.5% by mass or more and 4% by mass or less, and a content of the alcohol (C) is 5% by mass or more and 15% by mass or less;

(8) A dispersant comprising: a vinyl alcohol polymer (A) having a degree of saponification of 30 mol% or more and 80 mol% or less and having a degree of polymerization of 100 or more and 700 or less; and a compound (B), wherein the compound (B) is a compound represented by the following formula (1):

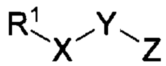 (1)

wherein, in the formula (1): X represents an oxygen atom, a group represented by the following formula (2), or a group represented by the following formula (3); Y represents a group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group,

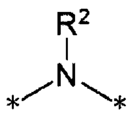 (2)

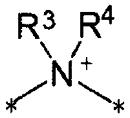 (3)

in the formula (2) and the formula (3): $R^2$, $R^3$, and $R^4$ each independently represent a hydrogen atom, an alkyl group having 1 to 3 carbon atoms, or an atomic bonding that bonds to Y; and * denotes an atomic bonding;

(9) A method for producing a vinyl compound polymer, the method comprising: polymerizing a vinyl compound in the presence of the dispersant according to (8);

(10) A method for producing a solution, the method comprising: adding a vinyl alcohol polymer (A) having a degree of saponification of 30 mol% or more and 80 mol% or less and having a degree of polymerization of 100 or more and 700 or less, to a liquid in multiple portions, the liquid comprising a compound (B) represented by the following formula (1), and an alcohol (C),

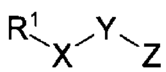 (1)

wherein, in the formula (1): X represents an oxygen atom, a group represented by the following formula (2), or a group represented by the following formula (3); Y represents a group having 1 to 10 carbon atoms; Z represents one selected

from the group consisting of a carboxy group, a sulfo group, a phosphoric acid group, a salt thereof, and an anion thereof; and $R^1$ represents an acyl group or a hydrocarbon group,

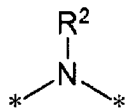
(2)

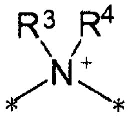
(3)

in the formula (2) and the formula (3): $R^2$, $R^3$, and $R^4$ each independently represent a hydrogen atom, an alkyl group having 1 to 3 carbon atoms, or an atomic bonding that bonds to Y; and * denotes an atomic bonding;

(11) A dispersant which is a solution comprising a vinyl alcohol polymer (A) at a concentration of 15% by mass or more, the vinyl alcohol polymer (A) having a degree of saponification of 30 mol% or more and 80 mol% or less and having a degree of polymerization of 100 or more and 700 or less, wherein a block character of vinyl ester units is 0.6 or less;

(12) The dispersant according to (11), wherein the solution comprises at least one selected from the group consisting of: an acid having an acid dissociation constant (pKa) in water of 0 or more and 6.0 or less; a salt thereof; and an anion thereof;

(13) The dispersant according to (11) or (12), which is to be used in polymerizing a vinyl compound;

(14) A method for producing a vinyl compound polymer, the method comprising: preparing a vinyl alcohol polymer (A) having a degree of saponification of 30 mol% or more and 80 mol% or less and having a degree of polymerization of 100 or more and 700 or less, wherein a block character of vinyl ester units is 0.6 or less; and polymerizing a vinyl compound in the presence of the vinyl alcohol polymer (A) to give vinyl compound polymer particles having an average particle diameter of 220 μm or less, wherein in the preparing, a solution comprising the vinyl alcohol polymer (A) at a concentration of 15% by mass or more is prepared;

(15) The method for producing a vinyl compound polymer according to (14), wherein the solution in the preparing comprises at least one selected from the group consisting of: an acid having an acid dissociation constant (pKa) in water of 0 or more and 6.0 or less; a salt thereof; and an anion thereof;

(16) The method for producing a vinyl compound polymer according to (14) or (15), wherein in the polymerizing, the solution comprising the vinyl alcohol polymer (A) at a concentration of 15% by mass or more is introduced into a polymerization reaction system of the vinyl compound;

(17) The method for producing a vinyl compound polymer according to (14) or (15), wherein in the polymerizing, the solution comprising the vinyl alcohol polymer (A) at a concentration of 15% by mass or more is diluted and introduced into a polymerization reaction system of the vinyl compound.

[Effects of the Invention]

The present invention enables providing: a solution that is, irrespective of alcohol content, highly stable and is superior in performance as a dispersant for suspension polymerization; and a method for producing such a solution.

Furthermore, the present invention enables providing: a dispersant that is superior in performance as a dispersant for suspension polymerization; and a method for producing a vinyl compound polymer in which such a dispersant is used.

[DESCRIPTION OF EMBODIMENTS]

In the present description, numerical value ranges described using "to" mean that numerical values before and after "to" are included as the lower limit value and the upper limit value, respectively.

Solution

A solution according to one embodiment of the present invention comprises: a vinyl alcohol polymer (A) (hereinafter, may be also referred to as "PVA (A)") having a degree of saponification of 30 mol% or more and 80 mol% or less and having a degree of polymerization of 100 or more and 700 or less; a compound (B); and an alcohol (C), wherein the compound (B) is a compound represented by formula (1) described later.

The solution is highly stable, irrespective of the content of the alcohol (C). The solution can be prepared as a

solution having a high concentration of PVA (A) and having low viscosity, and being highly stable, by adjusting a composition ratio, etc. Such a solution is particularly suitable in terms of productivity and handleability. In the solution, the content of the alcohol (C) is not limited, and for example, by increasing the content of the alcohol (C), a solution having particularly low viscosity can be prepared. On the other hand, by decreasing the content of the alcohol (C), handleability in waste liquid treatment and the like can be improved, for example. In addition, the solution is superior in performance as a dispersant for suspension polymerization. Specifically, by using the solution for suspension polymerization as a dispersant, polymer particles having an average particle diameter not enlarged, and being accompanied by fewer coarse particles can be efficiently obtained. Moreover, polymer particles obtained by suspension polymerization using the solution as a dispersant has favorable plasticizer absorption.

Although the reason for achieving the effects as described above by the solution is not clear, presumable reasons are as in the following. Owing to having the specified structure, the compound (B) serves as a favorable surfactant, whereby a favorable dispersion state of the PVA (A) in the solution may be maintained, and thus stability of the solution is expected to improve. Furthermore, owing to comprising the alcohol (C) in the solution, stability and the like of the solution may increase. In addition, it is presumed that owing to having the specified structure in the compound (B), an acid dissociation constant of the compound (B) may fall within an appropriate range, thereby leading to an influence on the effect described above. More specifically, for example, in an environment approximate to neutral, or the like, the compound (B) can enhance dispersion stability of the PVA (A) by interaction with the PVA (A). On the other hand, in a suspension polymerization system, which is typically in a weakly acidic environment, it is considered that the compound (B) is separated from the PVA (A), whereby the PVA (A) is less likely to be influenced by the compound (B), and thus satisfactorily serves as a dispersant for suspension polymerization.

Accordingly, when suspension polymerization is carried out, the solution is added into the suspension polymerization system and can be suitably used as a dispersant. In addition, since the solution is a liquid, dissolution of the vinyl alcohol polymer is not necessary in cases of use as a dispersant of suspension polymerization, thereby resulting in advantages such as superior handleability.

The solution may further comprise other component(s) aside from the PVA (A), the compound (B), and the alcohol (C). Each component and the like of the solution are described in detail below.

PVA (A)

The PVA (A) is a polymer having a vinyl alcohol unit as a structural unit. The PVA (A) is typically obtained by subjecting a vinyl ester polymer to saponification. The PVA (A) is a PVA having a degree of saponification of 30 mol% or more and 80 mol% or less and having a degree of polymerization of 100 or more and 700 or less. The PVA (A) having these degree of saponification and degree of polymerization is typically less soluble in water, and even in cases in which the solution can be obtained, stability thereof may be inferior, and gelation, precipitation, and the like are likely to occur. In the solution according to one embodiment of the present invention, owing to comprising the compound (B) and the alcohol (C), the solution is highly stable, irrespective of comprising such a PVA (A).

The lower limit of the degree of saponification of the PVA (A) is 30 mol%, or may be 32 mol% or 34 mol%. The upper limit of the degree of saponification of the PVA (A) is 80 mol%, or may be 70 mol%, 60 mol%, 50 mol%, 45 mol%, or 40 mol%. In cases in which the degree of saponification of the PVA (A) falls within the above range, optimization of surface activity, and the like, may lead to enabling performance as a dispersant for suspension polymerization to be enhanced, and the like. The degree of saponification is a value measured by a method in accordance with JIS K6726: 1994.

The lower limit of the degree of polymerization of the PVA (A) is 100, or may be 130, 160, 190, or 210. Owing to the degree of polymerization being more than or equal to the lower limit, a protective colloid property may be enhanced, whereby polymer particles having smaller particle diameters can be produced, etc., when the PVA (A) is used as a dispersant for suspension polymerization. On the other hand, the upper limit of the degree of polymerization is 700, or may be 600, 500, 400 or 300. Owing to the degree of polymerization being less than or equal to the upper limit, the surface activity may increase, and thus when used as a dispersant for suspension polymerization, a plasticizer-absorbing capacity of resulting polymer particles increases, whereby polymer particles having smaller particle diameters can be produced, etc. Further, owing to the degree of polymerization being less than or equal to the upper limit, the solution tends to have a lowered viscosity. It is to be noted that the degree of polymerization of the PVA (A) as referred to means a viscosity-average degree of polymerization measured in accordance with JIS K6726: 1994.

The PVA (A) may have other structural unit(s). aside from the vinyl alcohol unit and the vinyl ester unit (hereinafter, may be also referred to as "residual vinyl ester unit"). Examples of the monomer that gives other structural unit include: $\alpha$-olefins such as ethylene, propylene, 1-butene, isobutene, and 1-hexene; acrylic acid and methacrylic acid; acrylic acid esters such as methyl acrylate and ethyl acrylate; methacrylic acid esters such as methyl methacrylate and ethyl methacrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, and n-butyl vinyl ether; hydroxyl group-containing vinyl ethers such as ethylene

glycol vinyl ether, 1,3-propanediol vinyl ether, and 1,4-butanediol vinyl ether; allyl acetate; allyl ethers such as propyl allyl ether, butyl allyl ether, and hexyl allyl ether; monomers having an oxyalkylene group; isopropenyl acetate; 3-buten-1-ol, 4-penten-1-ol, 5-hexen-1-ol, hydroxy group-containing α-olefins such as 7-octen-1-ol, 9-decen-1-ol and 3-methyl-3-buten-1-ol; monomers having a silyl group, such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like. Of these, an α-olefin, acrylic acid, methacrylic acid, an acrylic acid ester, or a methacrylic acid ester is preferred. Moreover, in one mode of the present invention, it is preferred that the PVA (A) does not have a polyoxyethylene side chain, whereas in an other embodiment it is preferred that the PVA (A) does not have a structural unit derived from a monomer having an oxyalkylene group.

A proportion of the other structural unit in total structural units in the PVA (A) may be preferably 20 mol% or less, or may be more preferably 15 mol% or less, 10 mol% or less, 5 mol% or less, or 1 mol% or less. On the other hand, the proportion of the other structural unit may be, for example, 0.1 mol% or more, or may be 1 mol% or more.

As the PVA (A), one without being graft-copolymerized can be preferably used. However, the PVA (A) may be modified with one type, or two or more types of graft-copolymerizable monomer(s). The graft copolymerization can be carried out on at least one of a vinyl ester polymer and a PVA obtained by saponifying the same. The graft copolymerizable monomer is exemplified by: an unsaturated carboxylic acid or a derivative thereof; an unsaturated sulfonic acid or a derivative thereof; an α-olefin having 2 to 30 carbon atoms; and the like. A proportion of the structural unit derived from the graft-copolymerizable monomer in the PVA (A) is preferably 5 mol% or less with respect to the total structural units in the PVA (A).

The block character of the vinyl ester unit in the PVA (A) (hereinafter, may be also merely referred to as "block character") may be, for example, 0.3 or more and 0.8 or less, and is preferably 0.4 or more and 0.6 or less. The lower limit of the block character may be 0.42 or 0.45. The upper limit of the block character may be 0.58, 0.55, or 0.53. When the block character falls within the above range, owing to favorably expressed surface activity, and the like, the performance as a dispersant for suspension polymerization can be enhanced. Specifically, for example, polymer particles that are more favorable in plasticizer absorption can be produced. On the other hand, in cases in which the block character falls within a comparatively low range as described above, in general, water solubility of the PVA (A) and stability of the solution tend to be lowered. Therefore, in cases in which the present invention is applied to the PVA (A) having such a block character, technical significance of enhanced stability of the solution can be significant.

The block character of a PVA as referred to is a value representing distribution of residual esters (typically alkoxycarbonyl groups) and hydroxy groups formed by saponification of esters, and can fall within a numerical range of 0 to 2. "0" indicates that residual esters or hydroxy groups are distributed completely as blocks. As the value increases, alternation increases, and "1" indicates that residual esters and hydroxy groups are present completely at random, and "2" indicates that residual esters and hydroxyl groups are present completely alternately. The "residual esters" as referred to herein mean esters (-O-C(=O)-Q (where Q represents a hydrocarbon group other than $CH_2$=CH-O-C(=O) contained in the vinyl ester monomer)) contained in the vinyl ester units in the PVA to be obtained through a saponification treatment. In other words, the block character is a value representing the distribution of vinyl ester units and vinyl alcohol units. It is to be noted that the block character can be determined by $^{13}$C-NMR spectroscopy. In a case in which the PVA has other repeating unit(s) aside from the vinyl ester units and/or the vinyl alcohol units, the block character is calculated targeting all sites having sequences of the vinyl ester units and/or the vinyl alcohol units in the PVA.

The block character described above can be adjusted with: type of the vinyl ester monomer; the presence or absence of a chain transfer agent; saponification conditions such as a catalyst and a solvent. For example, in cases in which saponification is carried out using an alkali catalyst, a PVA with comparatively high blockiness, i.e., having a block character of 0.6 or less, tends to be readily obtained. On the other hand, in cases in which saponification is carried out using an acid catalyst, a PVA with comparatively high randomness, i.e., having a block character of more than 0.6, tends to be readily obtained.

The solution may comprise one type, or two or more types of the PVA (A).

The lower limit of a content of the PVA (A) in the solution is preferably 15% by mass, more preferably 20% by mass, still more preferably 25% by mass, 30% by mass, or may be even more preferably 35% by mass or 40% by mass. When the content of the PVA (A) is more than or equal to the lower limit, a highly concentrated PVA solution is provided, thereby allowing for performing efficient distribution, storage, etc. Furthermore, when the content of the PVA (A) is more than or equal to the lower limit, stability of the solution tends to be more enhanced. The upper limit of the content of the PVA (A) may be 70% by mass, or may be 60% by mass, 50% by mass, or 40% by mass. When the content of the PVA (A) is less than or equal to the upper limit, lowering of the viscosity the solution, and the like can be contemplated.

Process for Producing PVA (A)

The PVA (A) can be produced by, for example: polymerizing a vinyl ester monomer to give a vinyl ester polymer; and subjecting the vinyl ester polymer thus obtained to saponification.

Examples of the vinyl ester monomer include vinyl formate, vinyl acetate, vinyl propionate, vinyl valerate, vinyl caprate, vinyl laurate, vinyl stearate, vinyl benzoate, vinyl pivalate, vinyl versatate, and the like. Of these, vinyl acetate is preferred.

The procedure of polymerizing the vinyl ester monomer is exemplified by a well-known procedure such as a bulk polymerization procedure, a solution polymerization procedure, a suspension polymerization procedure, an emulsion polymerization procedure, and the like. Of these procedures, the bulk polymerization procedure performed without a solvent or the solution polymerization procedure performed with a solvent such as an alcohol or the like are preferred, and the solution polymerization procedure in which the polymerization is performed in the presence of a lower alcohol is more preferred. The lower alcohol is preferably an alcohol having 3 or fewer carbon atoms; more preferably methanol, ethanol, n-propanol, or isopropanol; and still more preferably methanol. In carrying out a polymerization reaction by the bulk polymerization procedure or the solution polymerization procedure, in terms of a reaction system, either of a batchwise system or a continuous system can be employed.

A polymerization initiator to be used in the polymerization reaction is exemplified by well-known polymerization initiators, e.g., azo initiators such as 2,2'-azobisisobutyronitrile, 2,2'-azobis(2,4-dimethylvaleronitrile), and 2,2'-azobis(4-methoxy-2,4-dimethylvaleronitrile); organic peroxide initiators such as benzoyl peroxide, n-propyl peroxycarbonate, cumyl peroxyneodecanoate, and t-butyl peroxyneodecanoate; and the like. A polymerization temperature at a time of conducting the polymerization reaction is not particularly limited, and a range of 5 °C or more and 200 °C or less is preferred.

In polymerizing the vinyl ester monomer, copolymerizable other monomer(s) can be further copolymerized. Examples of the other monomer include those exemplified for the monomer that gives other structural unit, and the like.

In the copolymerization of the vinyl ester monomer, a certain chain transfer agent may also be present. Examples of the chain transfer agent include: aldehydes such as acetaldehyde, propionaldehyde, and butylaldehyde; ketones such as acetone and methyl ethyl ketone; mercaptans such as 2-hydroxyethanethiol and 3-mercaptopropionic acid; thiocarboxylic acids such as thioacetic acid; halogenated hydrocarbons such as trichloroethylene and perchloroethylene; and the like. The chain transfer agent may serve also as a modifying agent. Depending on the type of chain transfer agent, a predetermined group (e.g., a carboxyl group or the like) may be introduced into the terminal of the PVA (A). When the PVA (A) having a carboxyl group at its terminal is used, the plasticizer absorption of the polymer particles obtained by suspension polymerization tends to be more favorable. When the PVA (A) has a carboxyl group at its terminal, the carboxyl group may exist either in the form of a salt or in the form of an anion.

The saponification of the vinyl ester polymer thus obtained can be execute by, for example, subjecting the vinyl ester polymer to a treatment using an alkali catalyst or an acid catalyst, in an alcohol solution. For the saponification reaction of the vinyl ester polymer, an alcoholysis or hydrolysis reaction using a conventionally well-known alkali catalyst such as sodium hydroxide, potassium hydroxide, or sodium methoxide, or an acid catalyst such as p-toluenesulfonic acid can be adopted. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These can be used alone, or as a combination of two or more types thereof. Of these, due to convenience, it is preferred to use as the solvent, methanol or a mixed solution of methanol and methyl acetate, and to conduct the saponification reaction in the presence of sodium hydroxide that serves as the alkali catalyst.

The saponification can be performed using a belt-type reactor, a kneader-type reactor, a tower-type reactor, or the like. The PVA (A) obtained through saponification may be subjected to washing treatment or drying treatment.

Compound (B)

The compound (B) is a compound represented by the following formula (1).

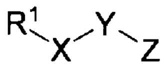 (1)

In the formula (1): X represents an oxygen atom, a group represented by the following formula (2), or a group represented by the following formula (3); Y represents a group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group.

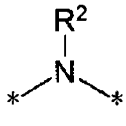 (2)

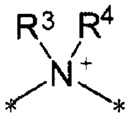

(3)

In the formula (2) and the formula (3), $R^2$, $R^3$, and $R^4$ each independently represent a hydrogen atom, an alkyl group having 1 to 3 carbon atoms, or an atomic bonding that bonds to Y; and * denotes an atomic bonding.

It is presumed that due to the compound (B) having, as X, a group that includes an electron attractive atom such as an oxygen atom or a nitrogen atom, homogeneity of the solution and/or separability from the PVA (A) may improve, whereby the above-described effects of the invention can be achieved.

X represents preferably the group represented by the above formula (2) or the group represented by the above formula (3), and more preferably the group represented by the above formula (2). In the case in which X represents the group represented by the above formula (2), $R^2$ represents preferably a hydrogen atom or the alkyl group having 1 to 3 carbon atoms, and more preferably a hydrogen atom, a methyl group, or an ethyl group, still more preferably a hydrogen atom or a methyl group, and even more preferably a methyl group. In the case in which X represents the group represented by the above formula (3), $R^3$ and $R^4$ each independently represent preferably a hydrogen atom or the alkyl group having 1 to 3 carbon atoms, more preferably a hydrogen atom, a methyl group, or an ethyl group, and still more preferably a hydrogen atom or a methyl group. Also, X represents preferably a secondary amine, tertiary amine, or a quaternary amine, and more preferably a secondary amine or a tertiary amine.

Y represents a group having 1 to 10 carbon atoms, more preferably a group having 1 to 8 carbon atoms, and more preferably a group having 1 to 5 carbon atoms. Y may include an atom other than carbon. The atom other than carbon which may be included in Y is preferably at least one selected from the group consisting of oxygen, nitrogen, and hydrogen, and more preferably hydrogen. In addition, Y may bond to X such that a ring structure is formed. In this instance, in a case in which X represents the group represented by the above formula (2), $R^2$ represents an atomic bonding that bonds to Y, and in a case in which X represents the group represented by the above formula (3), at least one of $R^3$ and $R^4$ represents an atomic bonding that bonds to Y. In one mode, it is preferred that Y does not form a ring structure through bonding to X. In one mode, Y may be a hydrocarbon group. A part or all of hydrogen atoms included in this hydrocarbon group may be substituted with an other atom or group, or may not be substituted, and are preferably not substituted or substituted with a carboxy group, a salt thereof, or an anion thereof. Y represents preferably the hydrocarbon group having 1 to 5 carbon atoms, more preferably a linear alkanediyl group ($-(CH_2)_n-$, wherein n is an integer of 1 to 5) having 1 to 5 carbon atoms, and still more preferably a methylene group ($-CH_2-$). It is also preferred that Y represents an alkanediyl group having 1 to 3 carbon atoms. Hydrogen atoms included in these alkanediyl groups may be substituted with a carboxy group, a salt thereof, or an anion thereof. In cases in which Y represents a comparatively small group, X including an oxygen atom or a nitrogen atom, being an electron-attractive atom is positioned in the vicinity of Z, whereby homogeneity of the solution and/or separability from the PVA (A) can be more improved.

Z represents preferably a salt of a carboxy group, a salt of a sulfo group, or a salt of a phosphoric acid group. Also, in one mode, Z represents preferably a carboxy group, a salt of a carboxy group, or an anion of a carboxy group, and more preferably a salt of a carboxy group. Furthermore, in cases in which the solution is, for example, an aqueous solution, Z may represent an anion of a carboxy group ($-COO^-$), an anion of a sulfo group ($-SO_3^-$), or an anion of a phosphoric acid group ($-HPO_4^-$ or $-PO_4^{2-}$). Alternatively, in a case in which Z represents a sulfo group ($SO_3H-$) or a phosphoric acid group ($H_2PO_4-$), the compound (B) may be a phosphoric acid ester or a sulfonic acid ester.

In the case in which Z represents a salt of a carboxy group, a salt of a sulfo group, or a salt of a phosphoric acid group, the type of the salt is not particularly limited. Examples of the salt include: alkali metal salts of sodium, potassium, lithium, and the like; alkaline earth metal salts of calcium, magnesium, and the like; aluminum salts; zinc salts; ammonium salts; organic amine salts of monoethanolamine, diethanolamine, triethanolamine, triisopropanolamine, and the like; basic salts of arginine, lysine, and the like. Of these, alkali metal salts are preferred, and sodium salts are more preferred. The compound (B) in the form of a salt is obtained by, for example, adding an alkaline compound or an aqueous solution thereof to the compound (B) that is a carboxylic acid, a sulfonic acid, or a phosphoric acid. For example, when a salt of an N-(long-chain acyl)amino acid described later is to be obtained, an alkaline compound or an aqueous solution thereof may be added to the N-(long-chain acyl)amino acid.

The number of carbon atoms of $R^1$ is, for example, 7 to 24, preferably 8 to 21, more preferably 10 to 14, and still more preferably 11 to 13.

It is preferred that $R^1$ represents an acyl group. In the case in which $R^1$ represents an acyl group, $R^1$ represents preferably a group represented by the following formula (4).

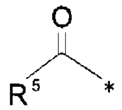

(4)

In the formula (4), $R^5$ represents a saturated or unsaturated hydrocarbon group having 7 to 20 carbon atoms; and * denotes an atomic bonding.

The number of carbon atoms of $R^5$ is preferably 9 to 13, and more preferably 10 to 12. In addition, $R^5$ represents preferably a linear saturated or unsaturated hydrocarbon group, and more preferably a linear saturated hydrocarbon group. It is also preferred that $R^5$ represents a saturated hydrocarbon group. In one mode, $R^5$ is preferably derived from coconut oil.

In the case in which $R^1$ represents a hydrocarbon group, the hydrocarbon group is preferably a saturated or unsaturated hydrocarbon group having 7 to 21 carbon atoms, more preferably a linear saturated or unsaturated hydrocarbon group having 7 to 21 carbon atoms, and still more preferably a linear saturated hydrocarbon group having 7 to 21 carbon atoms. $R^1$ which represents the hydrocarbon group is preferably an n-octyl group, an n-decyl group, a lauryl group, or an n-tetradecyl group.

In one mode, with regard to the compound (B), it is preferred that X in the formula (1) represents the group represented by the above formula (2), and $R^1$ represents an acyl group. In one mode, it is more preferred that: X represents the group represented by the above formula (2); Y represents the hydrocarbon group having 1 to 5 carbon atoms; Z represents a salt of a carboxy group; $R^1$ represents the group represented by the formula (4); $R^2$ represents the alkyl group having 1 to 3 carbon atoms; and $R^5$ represents the linear saturated hydrocarbon group having 9 to 13 carbon atoms.

In one mode, the compound (B) is preferably at least one selected from the group consisting of a phosphoric acid ester salt, an acyl amino acid salt, an acyl lactic acid salt, an acyl taurine salt, soap (a higher fatty acid), an alkyl sulfosuccinic acid salt, an acyl hydrolyzed collagen salt, and an acyl isethionic acid salt, more preferably at least one selected from the group consisting of an acyl lactic acid salt and an acyl amino acid salt, still more preferably an acyl amino acid salt, and even more preferably an N-acyl amino acid salt. As the acylamino acid salt, an N-acylamino acid salt is more preferred.

As the N-acyl amino acid salt, a salt of an N-acyl amino acid (also referred to as "N-(long-chain acyl)amino acid") is preferred, which is obtained by introducing to an amino group of an amino acid, an acyl group derived from a saturated or unsaturated fatty acid having 8 to 21 carbon atoms. An amino acid residue of the N-acyl amino acid salt may be any of various types of amino acids, such as an α-amino acid, a β-amino acid, a γ-amino acid, or a ω-amino acid, and the amino group may be an N-methyl amino group or an N-ethyl amino group. Furthermore, the optical isomer, i.e., whether a D-form, an L-form, or a racemic form, is not restricted. Examples of the amino acid residue of the N-acyl amino acid salt include glutamic acid, aspartic acid, glycine, sarcosine, alanine, leucine, isoleucine, serine, threonine, cysteine, cystine, methionine, lysine, arginine, phenylalanine, tyrosine, histidine, tryptophan, proline, oxyproline, β-aminopropionic acid, γ-aminobutyric acid, anthranilic acid, m-aminobenzoic acid, p-aminobenzoic acid, lanthionine, β-methyllanthionine, cystathionine, djenkolic acid, felinine, aminomalonic acid, β-oxyaspartic acid, α-amino-α-methylsuccinic acid, β-oxyglutamic acid, γ-oxyglutamic acid, γ-methylglutamic acid, γ-methylene glutamic acid, γ-methyl-γ-oxyglutamic acid, α-aminoadipic acid, α,α'-diaminoadipic acid, β,β'-diaminoadipic acid, α-amino-γ-oxyadipic acid, α-aminopimelic acid, α-amino-y-oxypimelic acid, β-aminopimelic acid, α-aminosuberic acid, α-aminosebacic acid, and the like, Of these, sarcosine is preferred.

The acyl group in the acyl lactic acid salt and the acyl amino acid salt is preferably one derived from the saturated or unsaturated fatty acid having 8 to 21 carbon atoms. This fatty acid may be any of linear, branched, or cyclic. Examples of the fatty acid include: linear saturated fatty acids such as caprylic acid, pelargonic acid, capric acid, undecanoic acid, lauric acid, tridecanoic acid, myristic acid, pentadecanoic acid, palmitic acid, margaric acid, stearic acid, nonadecanoic acid, and arachic acid; branched fatty acids such as 2-butyl-5-methylpentanoic acid, 2-isobutyl-5-methylpentanoic acid, dimethyloctanoic acid, dimethylnonanoic acid, 2-butyl-5-methylhexanoic acid, methylundecanoic acid, dimethyldecanoic acid, 2-ethyl-3-methylnonanoic acid, 2,2-dimethyl-4-ethyloctanoic acid, methyldocosanoic acid, 2-propyl-3-methylnonanoic acid, methyltridecanoic acid, dimethyldodecanoic acid, 2-butyl-3-methylnonanoic acid, methyltetradecanoic acid, ethyltridecanoic acid, propyldodecanoic acid, butylundecanoic acid, pentyldecanoic acid, hexylnonanoic acid, 2-(3-methylbutyl)-3-methylnonanoic acid, 2-(2-methylbutyl)-3-methylnonanoic acid, butylethylnonanoic acid, methylpentadecanoic acid, ethyltetradecanoic acid, propyltridecanoic acid, butyldodecanoic acid, pentylundecanoic acid, hexyldecanoic acid, heptylnonanoic acid, dimethyltetradecanoic acid, butylpentylheptanoic acid, trimethyltridecanoic acid, methylhexadecanoic acid, ethylpentadecanoic acid, propyltetradecanoic acid, butyltridecanoic acid, pentyldodecanoic acid, hexylundecanoic acid, heptyldecanoic acid, methylheptylnonanoic acid, dipentylheptanoic acid, methylheptadecanoic acid, ethylhexadecanoic acid, ethylhexadecanoic acid, propylpentadecanoic acid, butyltetradecanoic acid, pentyltridecanoic acid, hexyldodecanoic acid, heptylundecanoic acid, octyldecanoic acid, dimethylhexadecanoic acid, methyloctylnonanoic acid, methyloctadecanoic acid, ethylheptadecanoic acid, dimethylheptadecanoic acid, methyloctyldecanoic acid,

methylnonadecanoic acid, methylnonadecanoic acid, dimethyloctadecanoic acid, and butylheptylnonanoic acid; linear monoenoic acids such as octenoic acid, nonenoic acid, decenoic acid, caproleic acid, undecylenic acid, linderic acid, obtusilic acid, lauroleic acid, tridecenoic acid, tsuzuic acid, myristoleic acid, pentadecenoic acid, hexadecenoic acid, palmitoleic acid, heptadecenoic acid, octadecenoic acid, oleic acid, nonadecenoic acid, and gondoic acid; branched monoenoic acids such as methylheptenoic acid, methylnonenoic acid, methylundecenoic acid, dimethyldecenoic acid, methyldodecenoic acid, methyltridecenoic acid, dimethyldodecenoic acid, dimethyltridecenoic acid, methyloctadecenoic acid, dimethylheptadecenoic acid, and ethyloctadecenoic acid; dienoic or trienoic acids such as linoleic acid, linoelaidic acid, eleostearic acid, linolenic acid, linolenelaidic acid, pseudoeleostearic acid, parinaric acid, and arachidonic acid; acetylenic acids such as octynoic acid, nonynoic acid, decynoic acid, undecynoic acid, dodecynoic acid, tridecynoic acid, tetradecynoic acid, pentadecynoic acid, heptadecynoic acid, octadecynoic acid, nonadecynoic acid, and dimethyloctadecynoic acid; and cyclic acids such as methylene octadecenoic acid, methylene octadecanoic acid, aleprolic acid, aleprestic acid, aleprylic acid, alepric acid, hydnocarpic acid, chaulmoogric acid, gorlic acid, α-cyclopentyl acid, α-cyclohexyl acid, and α-cyclopentylethyl acid. As the fatty acid, a linear fatty acid is preferred. Also, the fatty acid is preferably a saturated fatty acid, more preferably a linear saturated fatty acid, and particularly preferably lauric acid.

The acyl group in the acyllactic acid salt and the acylamino acid salt may be derived from a fatty acid obtained from a natural fat or oil, and is preferably an acyl group derived from mixed fatty acids containing 80% by mass or more saturated or unsaturated fatty acid(s) having 8 to 21 carbon atoms. Examples of such an acyl group include acyl groups derived from coconut oil fatty acids, palm oil fatty acids, linseed oil fatty acids, sunflower oil fatty acids, soybean oil fatty acids, sesame-seed oil fatty acids, castor oil fatty acids, olive oil fatty acids, camellia oil fatty acids, or the like.

In the case in which the compound (B) is the acyl amino acid salt, examples of preferred acyl amino acid salt include sodium cocoyl glutamate, TEA-cocoyl glutamate, potassium cocoyl glutamate, sodium lauroyl glutamate, TEA-lauroyl glutamate, potassium lauroyl glutamate, sodium cocoyl sarcosinate, TEA-cocoyl sarcosinate, potassium cocoyl sarcosinate, sodium lauroyl sarcosinate, TEA-lauroyl sarcosinate, potassium lauroyl sarcosinate, sodium cocoyl aspartate, TEA-cocoyl aspartate, potassium cocoyl aspartate, sodium lauroyl aspartate, TEA-lauroyl aspartate, potassium lauroyl aspartate, sodium cocoyl methyl alaninate, TEA-cocoyl methyl alaninate, potassium cocoyl methyl alaninate, sodium lauroyl methyl alaninate, TEA-lauroyl methyl alaninate, potassium lauroyl methyl alaninate, sodium cocoyl glycinate, TEA-cocoyl glycinate, potassium cocoyl glycinate, sodium lauroyl glycinate, TEA-lauroyl glycinate, potassium lauroyl glycinate, sodium myristoyl sarcosinate, TEA-myristoyl sarcosinate, potassium myristoyl sarcosinate, sodium lauroyl methyl-β-alaninate, TEA-lauroyl methyl-β-alaninate, potassium lauroyl methyl-β-alaninate, sodium cocoyl methyl-β-alaninate, TEA-cocoyl methyl-β-alaninate, potassium cocoyl methyl-β-alaninate, and the like. Of these, lauroyl sarcosinate salt is more preferred, and sodium lauroyl sarcosinate is still more preferred.

In the case in which the compound (B) is the acyl lactic acid salt, examples of preferred acyl lactic acid salt include sodium cocoyl lactate, TEA-cocoyl lactate, potassium cocoyl lactate, sodium lauroyl lactate, TEA-lauroyl lactate, potassium lauroyl lactate, sodium stearoyl lactate, TEA-stearoyl lactate, potassium stearoyl lactate, sodium isostearoyl lactate, TEA-isostearoyl lactate, potassium isostearoyl lactate, and the like.

It is preferred that the compound (B) is at least one selected from the group consisting of an acid having an acid dissociation constant (pKa) in water of 0 or more and 6.0 or less, a salt thereof, and an anion thereof. The lower limit of the pKa is more preferably 1.0, and still more preferably 1.5. Further, the upper limit of the pKa is more preferably 5.5, and still more preferably 5.0. When the compound (B) is an acid having a pKa falling within the above range, or a salt thereof, solubility of the PVA (A) in the solution comprising the PVA (A) and the compound (B) may be more superior, and separability from the PVA (A) in solution under weakly acidic conditions (for example, in a suspension polymerization system) may be more superior.

The solution may comprise one type, or two or more types of the compound (B).

The lower limit of the content of the compound (B) in the solution may be, for example, 0.1% by mass, and is preferably 0.5% by mass, more preferably 0.7% by mass, 0.8% by mass, and still more preferably 0.9% by mass. When the content of the compound (B) is more than or equal to the lower limit, e.g., the stability of the solution can be more enhanced. The upper limit of the content of the compound (B) is preferably 10% by mass, more preferably 4% by mass, and still more preferably 2% by mass. When the content of the compound (B) is less than or equal to the upper limit, influences from the compound (B) during the suspension polymerization may be more diminished, and performance as a dispersant for suspension polymerization may be more enhanced.

Alcohol (C)

Examples of the alcohol (C) include: monovalent alcohols such as methanol, ethanol, 1-propanol, 2-propanol, 1-butanol, 2-methyl-1-propanol, 2-butanol, and 2-methyl-2-propanol; and polyhydric alcohols such as ethylene glycol and glycerin. As the alcohol (C), an alcohol having 1 to 4 carbon atoms is preferred in light of the solubility of the PVA (A), miscibility with water, viscosity of the solution, and the like. The number of carbon atoms of the alcohol (C) is more preferably 1 to 3, and still more preferably 2. In one embodiment, the alcohol (C) is preferably a linear alcohol. The alcohol

(C) may be also preferably a monovalent alcohol, or may be also preferably a primary alcohol, and ethanol is particularly preferred.

The solution can comprise one type, or two or more types of the alcohol (C).

The lower limit of the content of the alcohol (C) in the solution may be, for example, 1% by mass, and is preferably 3% by mass, more preferably 5% by mass, still more preferably 6% by mass, and even more preferably 7% by mass. When the content of the alcohol (C) is more than or equal to the lower limit, e.g., stability of the solution can be more enhanced. The upper limit of the content of the alcohol (C) is, preferably 80% by mass, and more preferably 50% by mass. The content of the alcohol (C) may be yet more preferably less than 20% by mass or 15% by mass or less. When the content of the alcohol (C) is less than or equal to the upper limit or less than the upper limit, facilitating waste liquid treatment, diminishing influences on the environment, and the like may be realized, and the handleability may improve.

0 In the solution, it is more preferred that the content of the compound (B) is 0.5% by mass or more and 4% by mass or less, and the content of the alcohol (C) is 5% by mass or more and 15% by mass or less. In such a case, the solution becomes superior in a property as a dispersant in suspension polymerization, and handleability in waste liquid treatment and the like may be also superior.

Other Component(s), and the like

The solution may comprise, for example, water, as an other component aside from the PVA (A), the compound (B), and the alcohol (C). The solution may be an aqueous solution. The lower limit of the content of water in the solution may be, for example, 0.1% by mass, or may be 1% by mass, 10% by mass, 20% by mass, 30% by mass, 40% by mass, or 50% by mass. The upper limit of the content of water in the solution may be, for example, 90% by mass, or may be 80% by mass, 70% by mass, or 60% by mass.

The solution may further comprise as the other component, a solid content other than the PVA (A) and compound (B), an organic solvent other than the alcohol, and/or the like. The solid content other than the PVA (A) and the compound (B) is exemplified by a resin aside from the PVA (A), as well as aside from the compound (B), a surfactant, a plasticizer, each compound used in production, and the like. Provided that, the lower limit of the total content of the PVA (A), the compound (B), the alcohol (C), and water in the solution is preferably 90% by mass, and more preferably 99% by mass, and still more preferably 99.9% by mass. The upper limit of the total content of the PVA (A), the compound (B), the alcohol (C), and water in the solution may be 100% by mass. Further, the lower limit of the total content of the PVA (A) and the compound (B) in the solid content of the solution is preferably 90% by mass, more preferably 99% by mass, and still more preferably 99.9% by mass. The upper limit of the total content of the PVA (A) and the compound (B) in the solid content of the solution may be 100% by mass.

The upper limit of the viscosity of the solution is preferably 30,000 mPa·s, more preferably 20,000 mPa·s, still more preferably 10,000 mPa·s, even more preferably 5,000 mPa·s, and particularly preferably 3,000 mPa·s. When the viscosity of the solution is less than or equal to the upper limit, enhancing handleability and the like can be realized. The lower limit of the viscosity may be 1 mPa·s, or may be 10 mPa·s, 100 mPa·s, 500 mPa·s, or 1,000 mPa·s. The viscosity of the solution is defined as a value measured under conditions involving a rotor speed of 60 rpm and a temperature of 20 °C, by using a B-type viscometer (spindle: LV-03 to LV-04).

The solution is preferably neutral or alkaline, and more preferably neutral or weakly alkaline. In such a case, the stability of the solution may be more enhanced. The pH of the solution is preferably 5.0 or more, and more preferably 6.0 or more. Also, the pH of the solution is preferably 9.0 or less, more preferably 8.0 or less, or may be 7.5 or less or 7.0 or less.

The solution can be suitably used as a dispersant for suspension polymerization. The solution may be used for other intended usage aside from the dispersant for suspension polymerization. The solution may be used as a dispersant for emulsion polymerization, or may be used for other intended usage aside from the dispersant. The other intended usage aside from the dispersant is exemplified by intended usage similar to each intended usage of conventional PVAs.

Method for Producing Solution

The method for producing the solution according to one embodiment of the present invention is not particularly limit and the solution can be produced by, for example, mixing each component. However, it is preferred that the solution is produced by the following method.

More specifically, the method for producing a solution according to one embodiment of the present invention comprises a step of adding the PVA (A) in multiple portions to a liquid comprising the compound (B) and the alcohol (C).

According to the production method, the solution of one embodiment of the present invention can be efficiently produced. In other words, the PVA (A) with low solubility in water and the like is allowed to dissolve efficiently, thereby enabling a solution that is highly stable and superior in performance as a dispersant for suspension polymerization to be obtained.

The number of addition times of the PVA (A) is not particularly limited as long as it is 2 times or more, and may be,

for example, 2 times or more and 20 times or less, or 3 times or more and 12 times or less. Moreover, in the production method, the liquid comprising the compound (B) and alcohol (C) may further comprise water and/or the like. Specific modes and suitable modes of each component such as the PVA (A), the compound (B), and the alcohol (C) to be used in the production method may be similar to specific modes and suitable modes of these components to be comprised in the solution according to the one embodiment of the present invention described above.

Dispersant

A dispersant (1) according to one embodiment of the present invention comprises the PVA (A) and the compound (B). The dispersant (1) is an additive for use in enhancing dispersibility of the monomer during suspension polymerization, controlling plasticizer absorption of resultant polymer particles, and the like. Specific modes and suitable modes of the PVA (A), the compound (B), and the alcohol (C) which is an optional component as described later, to be comprised in the dispersant (1) are similar to the specific modes and suitable modes of these components comprised in the solution according to one embodiment of the present invention described above.

The lower limit of the total content of the PVA (A) and the compound (B) in nonvolatiles of the dispersant (1) is preferably 30% by mass, more preferably 50% by mass, or may be still more preferably 70% by mass, 90% by mass, or 99% by mass. The upper limit of the total content of the PVA (A) and the compound (B) in the nonvolatiles of the dispersant (1) may be 100% by mass. Nonvolatiles other than the PVA (A) and the compound (B) which may be comprised in the dispersant (1) is exemplified by a resin aside from the PVA (A), as well as aside from the compound (B), a surfactant, a plasticizer, each compound used in production, and the like. The upper limit of the content of volatiles in the dispersant (1) is, for example, 80% by mass, or may be 60% by mass or 40% by mass. Examples of the volatiles which may be comprised in the dispersant (1) include the alcohol (C), water, and the like.

The dispersant (1) may be, for example, a dispersant, in a solid form (powdery or the like), consisting of only the PVA (A) and the compound (B). The dispersant in the solid form favorably dissolves in a solvent comprising an alcohol. The dispersant (1) in the solid form may be used after dissolution in a solvent not comprising an alcohol (for example, water). When used as a dispersant in suspension polymerization, the concentration of the PVA (A) in its polymerization system is typically not a high value exceeding 1% by mass, for example; therefore, the PVA (A) can be sufficiently dissolved even in a solvent not comprising an alcohol.

The dispersant (1) may be in a solution form. The dispersant (1) may comprise the alcohol (C), in addition to the PVA (A) and the compound (B), and/or may comprise water. In other words, in the case of use as a dispersant, the solution according to one embodiment of the present invention described above falls under one embodiment of the dispersant of the present invention. The dispersant which is in the solution form and is comparatively highly concentrated can be used after dilution. The dispersant (1) in the solution form comprising an alcohol is highly stable.

The dispersant (1) is superior in performance as a dispersant for suspension polymerization. The dispersant (1) is suitable as a dispersant for suspension polymerization of a vinyl compound, as polymer particles having an average particle diameter not enlarged, and being accompanied by fewer coarse particles can be efficiently obtained. In addition, the polymer particles obtained by suspension polymerization using the dispersant (1) are favorable also in plasticizer absorption.

The lower limit of the content of the compound (B) with respect to 100 parts by mass of the PVA (A) in the dispersant (1) is preferably 0.5 parts by mass, more preferably 1 part by mass, and still more preferably 2 parts by mass. When the content of the compound (B) is more than or equal to the lower limit, enhancing the solubility of the PVA (A), and the like may be possible. The upper limit of the content of the compound (B) with respect to 100 parts by mass of the PVA (A) in the dispersant (1) is preferably 20 parts by mass, more preferably 12 parts by mass, and still more preferably 10 parts by mass. When the content of the compound (B) is less than or equal to the upper limit, influences from the compound (B) during the suspension polymerization may be diminished, and performance as a dispersant may be more enhanced.

A dispersant (2) according to other embodiment of the present invention is a solution comprising the PVA (A) at a concentration of 15% by mass or more, the PVA (A) having a degree of saponification of 30 mol% or more and 80 mol% or less and having a degree of polymerization of 100 or more and 700 or less, wherein a block character of vinyl ester units is 0.6 or less. The dispersant (2) is an additive for use in enhancing dispersibility of the monomer during suspension polymerization, and the like. The dispersant (2) can be suitably used for polymerizing a vinyl compound. The dispersant (2) is suitable as a dispersant for suspension polymerization of a vinyl compound, and particles polymer particles having an average particle diameter not enlarged, and being accompanied by fewer coarse can be efficiently obtained. Furthermore, the polymer particles obtained by suspension polymerization using the dispersant (2) is also favorable in plasticizer absorption.

Specific modes and suitable modes of the PVA (A) to be comprised in the dispersant (2) are similar to those described above as the PVA (A) to be comprised in the solution according to one embodiment of the present invention. The lower limit of the concentration of the PVA (A) in the dispersant (2) is preferably 20% by mass, more preferably 25% by mass, still more preferably 30% by mass, or may be even more preferably 35% by mass or 40% by mass. The upper limit of

the concentration of the PVA (A) may be 70% by mass, or may be 60% by mass, 50% by mass, or 40% by mass.

The dispersant (2) preferably comprises at least one (compound (B')) selected from the group consisting of: an acid having an acid dissociation constant (pKa) in water of 0 or more and 6.0 or less; a salt thereof; and an anion thereof. The lower limit of the pKa is more preferably 1.0, and still more preferably 1.5. Furthermore, the upper limit of the pKa is more preferably 5.5, and still more preferably 5.0. Such a compound (B') is exemplified by a compounds having a carboxy group or a salt thereof. The compound (B') preferably has a hydrocarbon group having 7 to 24 carbon atoms, and a carboxy group or a salt thereof. The number of carbon atoms of the hydrocarbon group included in the compound (B') is preferably 8 to 21, more preferably 10 to 14, and still more preferably 11 to 13. The hydrocarbon group included in the compound (B') is preferably an aliphatic hydrocarbon group, and more preferably an alkyl group. Suitable modes of the compound (B') are exemplified by the compound (B) to be comprised in the solution according to one embodiment of the present invention. In other one embodiment of the present invention, the dispersant (2) preferably comprises the compound (B).

It is preferred that the dispersant (2) further comprises the alcohol (C). Specific modes and suitable modes of the alcohol (C) which may be comprised in the dispersant (2) are similar to those described above as the alcohol (C) to be comprised in the solution according to one embodiment of the present invention. In addition, specific modes and suitable modes of the dispersant (2) are exemplified by specific modes and suitable modes of the above-described solution according to one embodiment of the present invention or the dispersant (1).

Method for Producing Vinyl Compound Polymer

The method for producing a vinyl compound polymer according to one embodiment of the present invention comprises a step of polymerizing a vinyl compound in the presence of the dispersant according to one embodiment of the present invention. The production method may be a polymerization method of a vinyl compound. The production method is similar to a conventionally well-known method for producing a vinyl compound polymer except that the dispersant according to one embodiment of the present invention is used as a dispersant.

In the production method, a vinyl compound is typically subjected to suspension polymerization in an aqueous medium. As the aqueous medium, pure water, as well as an aqueous solution comprising any one of various types of additive components, or an aqueous medium comprising other organic solvent can be used. The dispersant is added to this aqueous medium. To the aqueous medium may further added a polymerization initiator and a vinyl compound, and suspension polymerization is performed with stirring.

The amount of the dispersant according to one embodiment of the present invention to be added in performing the suspension polymerization of the vinyl compound is not particularly limited, and on mass basis equivalent to the solid content with respect to the vinyl compound, preferably 1 ppm or more and 50,000 ppm or less, more preferably 10 ppm or more and 20,000 ppm or less, or may be still more preferably 10,000 ppm or less, 5,000 ppm or less, or 1,000 ppm or less.

The dispersant according to one embodiment of the present invention may be used alone, or may be used in combination with other dispersant and/or the like. The other dispersant and/or the like are/is exemplified by various types of dispersants to be commonly employed in performing suspension polymerization of a vinyl compound in an aqueous medium. Specific examples include: water-soluble cellulose ethers such as methylcellulose, hydroxyethylcellulose, hydroxypropylcellulose, and hydroxypropylmethylcellulose; PVAs other than the PVA (A), water-soluble polymers such as gelatin; oil-soluble emulsifying agents such as sorbitan monolaurate, sorbitan trioleate, glycerin tristearate, and an ethylene oxide-propylene oxide block copolymer; water soluble emulsifying agents such as polyoxyethylene sorbitan monolaurate, polyoxyethylene glycerin oleate, and sodium laurate; and the like.

As a polymerization initiator to be used the production method, a polymerization initiator which is conventionally used in polymerization of a vinyl compound may be used; and specifically, a polymerization initiator similar to those exemplified in relation to the polymerization of the vinyl ester monomer described above may be used. In one embodiment, the polymerization initiator is preferably an organic peroxide initiator. The organic peroxide initiator may be a compound having a peroxycarboxylic acid structure (-C(=O)-O-O-).

In the production method, other various types of additives may be added to the polymerization system as necessary. Examples of the additives include: polymerization modifiers such as aldehydes, halogenated hydrocarbons, and mercaptans; polymerization inhibitors such as phenol compounds, sulfur compounds, and N-oxide compounds; and the like. Furthermore, a pH adjusting agent, a scale inhibitor, a cross-linking agent, and/or the like may also be added. A plurality of the additives may be used in combination.

Examples of the vinyl compound which can be subjected to the suspension polymerization in the production method of the present invention include: halogenated vinyls such as vinyl chloride; vinyl esters such as vinyl acetate and vinyl propionate; acrylic acid, methacrylic acid, and esters and salts thereof; maleic acid, fumaric acid, and esters and anhydrides thereof; styrene; acrylonitrile; vinylidene chloride; vinyl ether; and the like. Of these vinyl compounds, halogenated vinyls are preferred, and vinyl chloride is more preferred. The production method of the present invention is particularly suitable as a method for suspension polymerization of vinyl chloride alone, or a method for suspension polymerization of vinyl chloride and a monomer copolymerizable with vinyl chloride together. Examples of the monomer

copolymerizable with vinyl chloride include: vinyl esters such as vinyl acetate and vinyl propionate; (meth)acrylic acid esters such as methyl (meth)acrylate and ethyl (meth)acrylate; α-olefins such as ethylene and propylene; unsaturated dicarboxylic acids such as maleic anhydride and itaconic acid; acrylonitrile; styrene; vinylidene chloride; vinyl ether; and the like. It is to be noted that in the case in which a halogen-containing vinyl compound such as vinyl halide or vinylidene chloride is used as the vinyl compound, hydrogen halide is generated as the polymerization progresses, whereby the polymerization system tends to become weakly acidic. It is believed that in the case in which the polymerization system becomes weakly acidic, the compound (B) is separated from the PVA (A) as described above, and the PVA (A) particularly favorably serves as a dispersant for suspension polymerization, without being affected by the compound (B).

When the suspension polymerization of the vinyl compound is carried out in the production method, a charging proportion of each component, a polymerization temperature, a polymerization time period, and the like may be similar to conditions that have been conventionally adopted in suspension polymerization of a vinyl compound. Furthermore, there is no limitation on a charging order and a ratio of the vinyl compound, the polymerization initiator, the dispersant, the aqueous medium, and the other additives.

In accordance with the production method of the present invention, polymer particles having an average particle diameter not enlarged, and being accompanied by fewer coarse particles can be efficiently obtained. Furthermore, the vinyl compound polymer particles to be obtained by the production method are also favorable in plasticizer absorption.

The method for producing a vinyl compound polymer according to the other embodiment of the present invention is a method comprising: preparing a PVA (A) having a degree of saponification of 30 mol% or more and 80 mol% or less and having a degree of polymerization of 100 or more and 700 or less, wherein a block character of vinyl ester units is 0.6 or less; and polymerizing a vinyl compound in the presence of the PVA (A) to give vinyl compound polymer particles having an average particle diameter of 220 μm or less, wherein in the preparing, a solution comprising the PVA (A) at a concentration of 15% by mass or more is prepared. Specific modes and suitable modes of the solution prepared by the production method are similar to the specific modes and suitable modes of the dispersant (2) according to one embodiment of the present invention described above.

In the method for producing a vinyl compound polymer according to an embodiment of the present invention, a solution (dispersant (2)) of the PVA (A) may be introduced into the polymerization reaction system of the vinyl compound, in the polymerizing step. Alternatively, in the production method, in the polymerizing step, the solution (dispersant (2)) of the PVA (A) may be diluted and introduced into the polymerization reaction system of the vinyl compound.

EXAMPLES

Hereinafter, the present invention is explained in more detail by way of Examples, but the present invention is not in any way limited to these Examples.

Production Example 1: Production of PVA-1

Into a 3-L reaction chamber equipped with a stirrer, a reflux condenser, a nitrogen feed port, an additive addition port, and an initiator addition port were charged 300 parts by mass of vinyl acetate and 1,200 parts by mass of methanol, and after the temperature was raised to 60 °C, replacement with nitrogen gas in the system was carried out by nitrogen bubbling for 30 min. Polymerization was started by adding 4.8 parts by mass of 2,2'-azobis(4-methoxy-2,4-dimethylvaleronitrile) (AIBN). During the polymerization, the polymerization temperature of 60 °C was maintained, and after 4 hours when the degree of polymerization reached 50%, the polymerization was stopped by cooling. Next, unreacted vinyl acetate was eliminated under reduced pressure to give a solution of polyvinyl acetate (PVAc) in methanol. Saponification was allowed by adding a solution of NaOH in methanol (concentration of 10% by mass) to the PVAc solution adjusted to 40% by mass, such that an alkali molar ratio (number of moles of NaOH/ number of moles of vinyl ester unit in PVAc) became 0.0025. The moisture content of the solution during saponification was adjusted to 1% by mass. The foregoing operation gave, as the PVA (A), a vinyl alcohol polymer (PVA-1) having a degree of polymerization (viscosity-average degree of polymerization) being 250, a degree of saponification being 43.1 mol%, and a block character of 0.499.

It is to be noted that the measurement of the degree of polymerization of the PVA obtained by each Production Example was performed as in the following. The solution in methanol of the PVAc before subjecting to the saponification reaction, which had been obtained previously, from which unreacted vinyl acetate was eliminated, was charged into n-hexane to allow for precipitation of the PVAc, and the PVAc recovered was dissolved in acetone. This procedure of purification by reprecipitation was conducted three times, followed by drying under reduced pressure at 60 °C, whereby a purified product of the PVAc was obtained. After a solution in methanol of the purified product of the PVAc was subjected to saponification at the alkali molar ratio of 0.2, Soxhlet extraction with methanol was performed for 3 days, and then drying gave the purified product of the PVA. The degree of polymerization (viscosity-average degree of polymerization) of the PVA thus obtained was measured in accordance with JIS K6726: 1994.

In addition, the block character of vinyl ester units in the PVA obtained by each Production Example was

determined in the following manner. The PVA was dissolved in a mixed solvent of deuterated water/deuterated methanol to obtain a sample. The sample was subjected to $^{13}C$-NMR spectroscopy at a measurement temperature of 70 °C, and 18,000 scans were accumulated. Then, three peaks in the dyad present in the methylene region were analyzed so as to calculate the block character from the integrated values of these peaks. The three peaks correspond to: a peak of methylene carbon sandwiched between a carbon atom in the main chain bonded to a residual ester (-O-C(=O)-Q, where Q is a hydrocarbon group as defined above) and another carbon atom in the main chain bonded to a hydroxy group; a peak of methylene carbon sandwiched between a carbon atom in the main chain bonded to a residual ester and another carbon atom in the main chain positioned close to the carbon atom and bonded to another residual ester; and a peak of methylene carbon sandwiched between a carbon atom in the main chain bonded to a hydroxy group and another carbon atom in the main chain positioned close to the carbon atom and bonded to hydroxyl. Specific measurement method and calculation method are described in "Poval" (Kobunshi Kanko Kai, published in 1984, pp. 246 to 249) and Macromolecules, 10, 532 (1977), and the measurement and the calculation were performed in accordance with description therein.

Production Examples 2 to 3: Production of PVA-2 to 3

As the PVA (A), PVA-2 to -3 were each produced by a similar procedure to that of Production Example 1, except that each molar ratio (alkali molar ratio) of sodium hydroxide with respect to the vinyl acetate unit in saponification was changed as shown in Table 1. Physical properties of PVA-2 to -3 are shown in Table 2.

Production Example 4: Production of PVA-4

As the PVA (A), PVA-4 was produced by a similar procedure to that of Production Example 1, except that in the saponification step, paratoluenesulfonic acid was used in place of NaOH, and that its molar ratio (number of moles of paratoluenesulfonic acid/ number of moles of vinyl ester unit in PVAc) was changed to 0.0210. Physical properties of PVA-4 are shown in Table 2.

Production Example 5: Production of PVA-5

Into a 3-L reaction chamber equipped with a stirrer, a reflux condenser, a nitrogen feed port, an additive addition port, and an initiator addition port were charged 1,050 parts by mass of vinyl acetate and 450 parts by mass of methanol, and after the temperature was raised to 60 °C, replacement with nitrogen gas in the system was carried out by nitrogen bubbling for 30 min. As a chain transfer agent, 3-mercaptopropionic acid (hereinafter, abbreviated to 3-MPA) was dissolved in methanol to prepare a 50% by mass solution, and nitrogen gas was bubbled to conduct nitrogen replacement. After the internal temperature of the reaction chamber was adjusted to 60 °C and 1.0 parts by mass of 3-MPA were added thereto, polymerization was started by adding 1.2 parts by mass of 2,2'-azobis(4-methoxy-2,4-dimethylvaleronitrile). During the polymerization, the polymerization temperature of 60 °C was maintained, and the 50% by mass solution of 3-MPA in in methanol was continuously added at 5 mL/hour such that 3-MPA accounted for 11.5 parts by mass in the entire system. Four hours later, when the conversion (rate of polymerization) reached 40%, the polymerization was stopped by cooling. Then, unreacted vinyl acetate was eliminated under a reduced pressure, whereby a solution of modified polyvinyl acetate (modified PVAc) in methanol was obtained. To a modified PVAc solution adjusted to 40% by mass was added a NaOH solution in methanol (10% by mass concentration) such that an alkali molar ratio (the number of moles of NaOH/ the number of moles of the vinyl ester unit in the modified PVAc) became 0.0243 to execute saponification. The moisture content of the solution during saponification was adjusted to 1% by mass. The foregoing operation gave, as the PVA (A), a polyvinyl alcohol polymer (PVA-5), having: a degree of polymerization being 140; a degree of saponification being 33.0 mol%; and a block character of 0.525, and including, at an end, a salt of a carboxyl group.

It is to be noted that, verification of the presence/absence of the salt of a carboxy group at the end of PVA-5 was conducted as follows. The PVA, the degree of polymerization of which had been measured, was dissolved in heavy water, and then subjected to a nuclear magnetic resonance analysis. As a result, a salt of a carboxy group (COONa group) being present at one end in the molecule was ascertained.

Production Examples 6 to 11: Production of PVA-6 to 11

As PVA (A), PVA-6 to -11 were each produced by a similar procedure to that of Production Example 5, except that the amounts of vinyl acetate and methanol used, the type and the amount of the chain transfer agent used, and the amount of AIBN used, each employed in polymerization, and the alkali molar ratio during saponification were changed as shown in Table 1. Physical properties of PVA-6 to - 11 are shown in Table 2.

Example 1

A solution of Example 1 was obtained by adding 40 parts by mass of PVA-1 in six portions to a liquid comprising: 1 part by mass of sodium lauroyl sarcosinate (lauroylsarcosine Na) as the compound (B); 8 parts by mass of ethanol as the alcohol (C); and 51 parts by mass of water. The viscosity measured on the solution thus obtained was 3,110 mPa·s. It is to be noted that the measurement of the viscosity of the solution was conducted under conditions involving a rotor speed of 60 rpm and a temperature of 20 °C, by using a B-type viscometer BLII (spindle: LV-04) manufactured by Toki Sangyo Co., Ltd.

Examples 2 to 30, Comparative Examples 1 to 5, Reference Example 1

Each solution of Examples 2 to 30, Comparative Examples 1 to 5, and Reference Example 1 was obtained by a similar procedure to that of Example 1, except that types and amounts of the PVA (A), the compound (B), and the alcohol (C), as well as the amount of water were changed as shown in Table 2. The measurement of the viscosity was conducted on each solution obtained. The results are shown in Table 2.

Evaluations

Stability of Solution

For each of the solutions obtained by Examples 1 to 30, Comparative Examples 1 to 5, and Reference Example 1, after being left to stand for 7 days at 40 °C, the viscosity was measured in a similar manner to that described above. The stability of the solutions was evaluated based on the viscosity before and after being left to stand, according to the following criteria. In this evaluation, the case of A or B was determined to be highly stable. The results of the evaluation are shown in Table 2.

A: The viscosity unchanged (percentage of increase in viscosity: less than 1%).
B: Although fluidity was found, the viscosity increased (percentage of increase in viscosity: exceeding 1%).
C: Fluidity was lost and gelation occurred.

Moreover, suspension polymerization of vinyl chloride was carried out according to the following method by using, as a dispersant, each solution of Examples 1 to 30, Comparative Example 3, 5, and Reference Example 1 which had been separately prepared. It is to be noted that suspension polymerization by using each solution of Comparative Examples 1, 2, and 4 was not conducted, due to low stability. Next, particles of each vinyl chloride polymer obtained were evaluated on the average particle diameter, the amount of coarse particles, and the plasticizer absorption as described below. The results of the evaluations are shown in Table 2.

Suspension Polymerization of Vinyl Chloride

From each solution of Examples and Comparative Examples, an aliquot in an amount of 400 ppm in terms of the solid content of the solution with respect to vinyl chloride described later was taken. Each solution thus provided was diluted by adding deionized water thereto, whereby a first aqueous dispersant liquid was obtained. 100 parts by mass of the first aqueous dispersant liquid were charged into an autoclave having a volume of 5 L. Similarly, from an aqueous PVA solution in which commercially available PVA ("Kuraray Poval 48-80" manufactured by Kuraray Co., Ltd.,) was dissolved, an aliquot in an amount of 800 ppm in terms of the solid content of the aqueous PVA solution with respect to vinyl chloride was taken. The aqueous PVA solution thus provided was diluted by adding deionized water thereto, whereby a second aqueous dispersant liquid was obtained. 100 parts by mass of the second aqueous dispersant liquid were charged into the above-described autoclave. Next, deionized water was added to the autoclave such that a total of deionized water was 1,300 parts by mass.

Subsequently, 0.65 parts by mass of a 70% by mass toluene solution of cumyl peroxyneodecanoate, and 1.05 parts by mass of a 70% by mass toluene solution of t-butyl peroxyneodecanoate were charged into the autoclave. Degassing was performed to remove oxygen such that pressure inside the autoclave was 0.0067 MPa. Thereafter, 800 parts by mass of vinyl chloride were charged into the autoclave, and a temperature of the contents inside the autoclave was raised to 57 °C to start polymerization with stirring. At the time of starting the polymerization, the pressure inside the autoclave was 0.83 MPa. The polymerization was terminated when 3.5 hrs had passed from the start of the polymerization and the pressure inside the autoclave had reached 0.70 MPa, and unreacted vinyl chloride was removed. Subsequently, a polymerization slurry was taken out and drying was performed at 65 °C for 17 hrs to give vinyl chloride polymer particles.

(1) Average particle diameter of vinyl chloride polymer particles

A particle diameter distribution of the vinyl chloride polymer particles obtained was measured by a dry sieve analysis using a wire mesh with a Tyler mesh standard. Results thereof were plotted in accordance with the Rosin-Rammler distribution equation, and an average particle diameter ($d_{p50}$; median diameter) was calculated. In this evaluation, the case of the average particle diameter being 220 μm or less was determined as the average particle diameter not being large. In regard to Comparative Examples 3 and 5, the resultant vinyl chloride polymer particles formed blocks, and although the average particle diameter was not measured by the method described above, the average particle diameter was clearly large.

(2) Amount of coarse particles of vinyl chloride polymer particles

A content of the vinyl chloride polymer particles obtained, which did not pass through a sieve having a mesh opening size of 250 μm (60 mesh in terms of mesh of JIS-standard sieve) was determined in terms of % by mass. The value being lower indicates fewer coarse particles, suggesting that the dispersant used is superior in polymerization stability. In this evaluation, the case of the amount of coarse particles being 10% by mass or less was determined as coarse particles being few. In regard to Comparative Examples 3 and 5, the resultant vinyl chloride polymer particles formed blocks. In other words, in Comparative Examples 3 and 5, substantially all exhibited coarse particles.

(3) Plasticizer absorptivity (CPA) of vinyl chloride polymer particles

A mass of a syringe having a volume of 5 mL, packed with 0.02 g of absorbent cotton, was weighed (defined as X (g)), and then a mass after charging thereinto 0.5 g of the vinyl chloride polymer particles was weighed (defined as Y (g)). Thereinto was charged 1 g of dioctyl phthalate (DOP), and the syringe was left to stand for 15 min. Subsequently, centrifugal separation was performed under conditions involving 3,000 rpm and 40 min to remove unabsorbed DOP, and a mass after removal was weighed (defined as Z (g)). Then, the plasticizer absorptivity (%) of the vinyl chloride polymer particles was determined by the following calculation formula. The plasticizer absorptivity being higher indicates that processing is easier, suggesting mainly that defects generated in the appearance, such as aggregates, are unlikely to appear during processing into a sheet. In this evaluation, the plasticizer absorptivity was assessed as being favorable in a case in which the plasticizer absorptivity was 25% or more. In regard to Comparative Examples 3 and 5, this evaluation was not performed.

$$\text{Plasticizer absorption (\%)} = 100 \times [\{Z - X) / (Y - X)\} - 1]$$

[Table 1]

| | PVA (A) | Using amount | | | | | Conversion (%) | Saponification conditions | | | |
|---|---|---|---|---|---|---|---|---|---|---|---|
| | | vinyl acetate (parts by mass) | methanol (parts by mass) | chain transfer agent | | AIBN (parts by mass) | | PVAc concentration (% by mass) | catalyst | molar ratio | moisture content (mass%) |
| | | | | type | (parts by mass) | | | | | | |
| Production Example 1 | PVA-1 | 300 | 1,200 | - | - | 4.8 | 50 | 40 | NaOH | 0.0025 | 1 |
| Production Example 2 | PVA-2 | 300 | 1,200 | - | - | 4.8 | 50 | 40 | NaOH | 0.0022 | 1 |
| Production Example 3 | PVA-3 | 300 | 1,200 | - | - | 4.8 | 50 | 40 | NaOH | 0.0030 | 1 |
| Production Example 4 | PVA-4 | 300 | 1,200 | - | - | 4.8 | 50 | 40 | paratoluenesulfonic acid | 0.0210 | 1 |
| Production Example 5 | PVA-5 | 1,050 | 450 | 3-mercaptopropionic acid | 11.5 | 1.2 | 40 | 40 | NaOH | 0.0243 | 1 |
| Production Example 6 | PVA-6 | 1,050 | 450 | 3-mercaptopropionic acid | 11.5 | 1.2 | 40 | 40 | NaOH | 0.0245 | 1 |
| Production Example 7 | PVA-7 | 1,050 | 450 | 3-mercaptopropionic acid | 11.5 | 1.2 | 40 | 40 | NaOH | 0.0255 | 1 |
| Production Example 8 | PVA-8 | 1,050 | 450 | 3-mercaptopropionic acid | 7.7 | 1.2 | 40 | 40 | NaOH | 0.0190 | 1 |
| Production Example 9 | PVA-9 | 1,500 | 0 | acetaldehyde | 272 | 4.8 | 40 | 40 | NaOH | 0.0514 | 1 |
| Production Example 10 | PVA-10 | 1,500 | 0 | acetaldehyde | 272 | 4.8 | 40 | 40 | NaOH | 0.0474 | 1 |
| Production Example 11 | PVA-11 | 1,500 | 0 | acetaldehyde | 37 | 0.6 | 40 | 40 | NaOH | 0.0170 | 1 |

[Table 2]

| | Solution | | | | | | | | | | | Evaluation | | | |
|---|---|---|---|---|---|---|---|---|---|---|---|---|---|---|---|
| | PVA (A) | | | | | Compound (B) | | Alcohol (C) | | Water | Viscosity (mP·s) | Stability | Average particle diameter (μm) | Amount of coarse particles (mass%) | Plasticizer absorptivity (%) |
| | type | degree of polymerization | degree of saponification (mol%) | block character | content (% by mass) | Type | content (% by mass) | type | content (% by mass) | content (% by mass) | | | | | |
| Example 1 | PVA-1 | 250 | 43.1 | 0.499 | 40 | lauroylsarcosine Na | 1.0 | ethanol | 8 | 51 | 3,110 | A | 171.5 | 2.2 | 31.5 |
| Example 2 | PVA-1 | 250 | 43.1 | 0.499 | 35 | lauroylsarcosine Na | 1.0 | ethanol | 8 | 56 | 1,750 | A | 171.6 | 2.4 | 31.5 |
| Example 3 | PVA-1 | 250 | 43.1 | 0.499 | 30 | lauroylsarcosine Na | 1.0 | ethanol | 8 | 61 | 850 | B | 174.9 | 2.4 | 31.3 |
| Example 4 | PVA-1 | 250 | 43.1 | 0.499 | 20 | lauroylsarcosine Na | 1.0 | ethanol | 8 | 71 | 160 | B | 177.5 | 2.9 | 30.9 |
| Example 5 | PVA-1 | 250 | 43.1 | 0.499 | 60 | lauroylsarcosine Na | 1.0 | ethanol | 38 | 1 | 7.5 | A | 172.9 | 2.5 | 30.5 |
| Example 6 | PVA-1 | 250 | 43.1 | 0.499 | 40 | lauroylsarcosine Na | 1.0 | ethanol | 58 | 1 | 1.2 | A | 171.0 | 1.9 | 31.2 |
| Example 7 | PVA-1 | 250 | 43.1 | 0.499 | 20 | lauroylsarcosine Na | 1.0 | ethanol | 78 | 1 | 1.1 | A | 177.4 | 2.3 | 30.1 |
| Example 8 | PVA-1 | 250 | 43.1 | 0.499 | 35 | lauroylsarcosine Na | 3.0 | ethanol | 8 | 54 | 1,620 | A | 207.5 | 8.8 | 31.2 |
| Example 9 | PVA-1 | 250 | 43.1 | 0.499 | 35 | lauroylsarcosine Na | 1.0 | ethanol | 30 | 34 | 680 | A | 172.2 | 2.7 | 30.3 |
| Example 10 | PVA-1 | 250 | 43.1 | 0.499 | 35 | lauroylsarcosine Na | 1.0 | methanol | 8 | 56 | 1,660 | A | 173.7 | 2.1 | 31.0 |
| Example 11 | PVA-1 | 250 | 43.1 | 0.499 | 35 | lauroylsarcosine Na | 1.0 | glycerin | 8 | 56 | 2,350 | A | 174.1 | 3.1 | 30.0 |
| Example 12 | PVA-2 | 250 | 30.5 | 0.538 | 35 | lauroylsarcosine Na | 1.0 | ethanol | 8 | 56 | 2,270 | A | 178.8 | 4.0 | 32.8 |
| Example 13 | PVA-3 | 250 | 56.3 | 0.477 | 35 | lauroylsarcosine Na | 1.0 | ethanol | 8 | 56 | 1,520 | A | 173.3 | 2.5 | 29.9 |
| Example 14 | PVA-4 | 250 | 55.2 | 0.744 | 35 | lauroylsarcosine Na | 1.0 | ethanol | 8 | 56 | 1,190 | A | 174.4 | 2.4 | 27.8 |
| Example 15 | PVA-5 | 140 | 33.0 | 0.525 | 35 | lauroylsarcosine Na | 1.0 | ethanol | 8 | 56 | 4,530 | A | 181.3 | 4.1 | 33.3 |
| Example 16 | PVA-6 | 140 | 40.5 | 0.505 | 35 | lauroylsarcosine Na | 1.0 | ethanol | 8 | 56 | 3,290 | A | 180.1 | 3.2 | 32.6 |
| Example 17 | PVA-7 | 140 | 55.2 | 0.480 | 35 | lauroylsarcosine Na | 1.0 | ethanol | 8 | 56 | 2,990 | A | 174.7 | 3.3 | 31.8 |
| Example 18 | PVA-8 | 450 | 41.9 | 0.512 | 35 | lauroylsarcosine Na | 1.0 | ethanol | 8 | 56 | 13,000 | A | 170.4 | 1.9 | 31.9 |
| Example 19 | PVA-9 | 120 | 69.4 | 0.443 | 35 | lauroylsarcosine Na | 1.0 | ethanol | 8 | 56 | 7,500 | A | 183.0 | 4.5 | 28.7 |
| Example 20 | PVA-10 | 120 | 48.1 | 0.480 | 35 | lauroylsarcosine Na | 1.0 | ethanol | 8 | 56 | 2,530 | A | 177.2 | 2.9 | 33.0 |
| Example 21 | PVA-11 | 590 | 76.7 | 0.439 | 35 | lauroylsarcosine Na | 1.0 | ethanol | 8 | 56 | 24,500 | A | 168.2 | 1.5 | 29.1 |
| Example 22 | PVA-1 | 250 | 43.1 | 0.499 | 35 | lauroylaspartate Na | 1.0 | ethanol | 8 | 56 | 1,720 | A | 172.2 | 2.5 | 30.9 |

(continued)

| | Solution | | | | | | | | | | | Evaluation | | | |
|---|---|---|---|---|---|---|---|---|---|---|---|---|---|---|---|
| | PVA (A) | | | | | Compound (B) | | Alcohol (C) | | Water | Viscosity (mP·s) | Stability | Average particle diameter (μm) | Amount of coarse particles (mass%) | Plasticizer absorptivity (%) |
| | type | degree of polymerization | degree of saponification (mol%) | block character | content (% by mass) | Type | content (% by mass) | type | content (% by mass) | content (% by mass) | | | | | |
| Example 23 | PVA-1 | 250 | 43.1 | 0.499 | 35 | cocoylglutamate Na | 1.0 | ethanol | 8 | 56 | 2,360 | A | 171.5 | 2.5 | 30.3 |
| Example 24 | PVA-1 | 250 | 43.1 | 0.499 | 35 | lauroylmethylalanine Na | 1.0 | ethanol | 8 | 56 | 2,500 | A | 169.9 | 2.4 | 30.2 |
| Example 25 | PVA-1 | 250 | 43.1 | 0.499 | 30 | lauroylsarcosine Na | 1.5 | ethanol | 4 | 65 | 1,800 | A | 173.7 | 1.9 | 31.3 |
| Example 26 | PVA-1 | 250 | 43.1 | 0.499 | 30 | lauroylaspartate Na | 1.5 | ethanol | 4 | 65 | 1,700 | A | 173.0 | 2.0 | 30.9 |
| Example 27 | PVA-1 | 250 | 43.1 | 0.499 | 30 | cocoylglutamate Na | 1.5 | ethanol | 4 | 65 | 2,000 | A | 175.1 | 2.2 | 31.5 |
| Example 28 | PVA-1 | 250 | 43.1 | 0.499 | 30 | lauroylmethylalanine Na | 1.5 | ethanol | 4 | 65 | 2,050 | A | 174.9 | 2.2 | 31.7 |
| Example 29 | PVA-1 | 250 | 43.1 | 0.499 | 30 | lauroylsarcosine Na | 0.73 | ethanol | 5 | 64 | 1,502 | B | 171.4 | 2.1 | 31.3 |
| Example 30 | PVA-1 | 250 | 43.1 | 0.499 | 30 | lauroylsarcosine Na | 0.73 | methanol | 5 | 64 | 1,840 | B | 171.3 | 2.2 | 31.4 |
| Comparative Example 1 | PVA-1 | 250 | 43.1 | 0.499 | 35 | lauroylsarcosine Na | 1.0 | - | 0 | 64 | - | C | - | - | - |
| Comparative Example 2 | PVA-1 | 250 | 43.1 | 0.499 | 35 | lauroylsarcosine Na | 3.0 | - | 0 | 62 | 2,380 | C | - | - | - |
| Comparative Example 3 | PVA-1 | 250 | 43.1 | 0.499 | 35 | lauroylsarcosine Na | 5.0 | - | 0 | 60 | 1,990 | A | Block | Block | - |
| Comparative Example 4 | PVA-1 | 250 | 43.1 | 0.499 | 35 | - | 0 | ethanol | 8 | 57 | - | C | - | - | - |
| Comparative Example 5 | PVA-1 | 250 | 43.1 | 0.499 | 35 | laurylsulphate Na | 1.0 | ethanol | 8 | 56 | 1,780 | A | Block | Block | - |
| Reference Example 1 | PVA-1 | 250 | 43.1 | 0.499 | 35 | - | 0 | ethanol | 30 | 35 | 730 | A | 172.9 | 2.5 | 30.6 |

As shown in Table 2, each solution of Examples 1 to 30 was highly stable.

In addition, in the case in which suspension polymerization was conducted using each solution of Examples 1 to 30 as a dispersant, obtaining vinyl chloride polymer particles that were favorable in plasticizer absorption with few coarse particles was enabled, without enlarging the average particle diameter. It was able to confirm that each solution of Examples 1 to 30 was useful as a dispersant for suspension polymerization.

On the other hand, Comparative Examples 1 to 5 each failed to give a highly stable solution comprising PVA (A), or an average particle diameter of resultant vinyl chloride polymer particles was large, and also many coarse particles were included.

It is to be noted that in the case in which the content of the alcohol (C) was increased as in Reference Example 1, use as a dispersant for suspension polymerization was enabled even though the solution did not comprise the compound (B), owing to high stability. However, in the case in which the content of the alcohol (C) was low as in Comparative Example 4, stability of the solution not comprising the compound (B) was inferior. To the contrary, in the cases in which the compound (B) is comprised as in each solution of Examples 1 to 30, highly stable solutions were obtained irrespective of the content of the alcohol (C). In addition, a comparison of Example 9 with Reference Example 1 revealed that owing to comprising the compound (B), the solution successfully had lowered viscosity.

[INDUSTRIAL APPLICABILITY]

The solution of the present invention can be suitably used as a dispersant for suspension polymerization.

## Claims

**1.** A solution comprising:

a vinyl alcohol polymer (A) having a degree of saponification of 30 mol% or more and 80 mol% or less and having a degree of polymerization of 100 or more and 700 or less;
a compound (B); and
an alcohol (C), wherein
the compound (B) is a compound represented by the following formula (1):

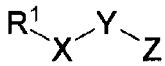
(1)

wherein, in the formula (1): X represents an oxygen atom, a group represented by the following formula (2), or a group represented by the following formula (3); Y represents a group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group,

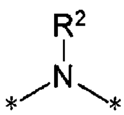
(2)

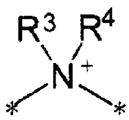
(3)

in the formula (2) and the formula (3): $R^2$, $R^3$, and $R^4$ each independently represent a hydrogen atom, an alkyl group having 1 to 3 carbon atoms, or an atomic bonding that bonds to Y; and * denotes an atomic bonding.

**2.** The solution according to claim 1, wherein a block character of vinyl ester units in the vinyl alcohol polymer (A) is 0.4 or more and 0.6 or less.

**3.** The solution according to claim 1, wherein a content of the vinyl alcohol polymer (A) is 15% by mass or more.

**4.** The solution according to claim 1, wherein a content of the compound (B) is 0.5% by mass or more and 10% by mass or

less.

**5.** The solution according to claim 1, wherein a content of the alcohol (C) is 5% by mass or more and 80% by mass or less.

**6.** The solution according to claim 1, wherein a content of the alcohol (C) is less than 20% by mass.

**7.** The solution according to claim 1, wherein a content of the compound (B) is 0.5% by mass or more and 4% by mass or less, and a content of the alcohol (C) is 5% by mass or more and 15% by mass or less.

**8.** A dispersant comprising:

a vinyl alcohol polymer (A) having a degree of saponification of 30 mol% or more and 80 mol% or less and having a degree of polymerization of 100 or more and 700 or less; and
a compound (B), wherein
the compound (B) is a compound represented by the following formula (1):

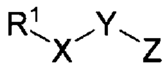 (1)

wherein, in the formula (1): X represents an oxygen atom, a group represented by the following formula (2), or a group represented by the following formula (3); Y represents a group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group,

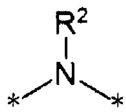 (2)

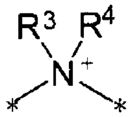 (3)

in the formula (2) and the formula (3): $R^2$, $R^3$, and $R^4$ each independently represent a hydrogen atom, an alkyl group having 1 to 3 carbon atoms, or an atomic bonding that bonds to Y; and * denotes an atomic bonding.

**9.** A method for producing a vinyl compound polymer, the method comprising:
polymerizing a vinyl compound in the presence of the dispersant according to claim 8.

**10.** A method for producing a solution, the method comprising:

adding a vinyl alcohol polymer (A) having a degree of saponification of 30 mol% or more and 80 mol% or less and having a degree of polymerization of 100 or more and 700 or less, to a liquid in multiple portions, the liquid comprising a compound (B) represented by the following formula (1), and an alcohol (C),

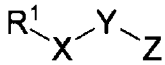 (1)

wherein, in the formula (1): X represents an oxygen atom, a group represented by the following formula (2), or a group represented by the following formula (3); Y represents a group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group,

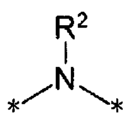 (2)

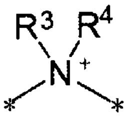

(3)

in the formula (2) and the formula (3): $R^2$, $R^3$, and $R^4$ each independently represent a hydrogen atom, an alkyl group having 1 to 3 carbon atoms, or an atomic bonding that bonds to Y; and * denotes an atomic bonding.

**11.** A dispersant which is a solution comprising a vinyl alcohol polymer (A) at a concentration of 15% by mass or more, the vinyl alcohol polymer (A) having a degree of saponification of 30 mol% or more and 80 mol% or less and having a degree of polymerization of 100 or more and 700 or less, wherein a block character of vinyl ester units is 0.6 or less.

**12.** The dispersant according to claim 11, wherein the solution comprises at least one selected from the group consisting of: an acid having an acid dissociation constant (pKa) in water of 0 or more and 6.0 or less; a salt thereof; and an anion thereof.

**13.** The dispersant according to claim 11 or 12, which is to be used in polymerizing a vinyl compound.

**14.** A method for producing a vinyl compound polymer, the method comprising:

preparing a vinyl alcohol polymer (A) having a degree of saponification of 30 mol% or more and 80 mol% or less and having a degree of polymerization of 100 or more and 700 or less, wherein a block character of vinyl ester units is 0.6 or less; and
polymerizing a vinyl compound in the presence of the vinyl alcohol polymer (A) to give vinyl compound polymer particles having an average particle diameter of 220 μm or less, wherein
in the preparing, a solution comprising the vinyl alcohol polymer (A) at a concentration of 15% by mass or more is prepared.

**15.** The method for producing a vinyl compound polymer according to claim 14, wherein the solution in the preparing comprises at least one selected from the group consisting of: an acid having an acid dissociation constant (pKa) in water of 0 or more and 6.0 or less; a salt thereof; and an anion thereof.

**16.** The method for producing a vinyl compound polymer according to claim 14 or 15, wherein in the polymerizing, the solution comprising the vinyl alcohol polymer (A) at a concentration of 15% by mass or more is introduced into a polymerization reaction system of the vinyl compound.

**17.** The method for producing a vinyl compound polymer according to claim 14 or 15, wherein in the polymerizing, the solution comprising the vinyl alcohol polymer (A) at a concentration of 15% by mass or more is diluted and introduced into a polymerization reaction system of the vinyl compound.

## INTERNATIONAL SEARCH REPORT

International application No. **PCT/JP2024/013188**

### A. CLASSIFICATION OF SUBJECT MATTER

***C08L 29/04***(2006.01)i; ***C08F 16/06***(2006.01)i; ***C08F 216/06***(2006.01)i; ***C08K 5/00***(2006.01)i
FI: C08L29/04; C08F216/06; C08F16/06; C08K5/00

According to International Patent Classification (IPC) or to both national classification and IPC

### B. FIELDS SEARCHED

Minimum documentation searched (classification system followed by classification symbols)

C08L29/04; C08F16/06; C08F216/06; C08K5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2018/116885 A1 (KURARAY CO., LTD.) 28 June 2018 (2018-06-28) claims 1, 2, 11, paragraphs [0063], [0067], examples, tables 1-3 | 11, 13-14, 16-17<br>1-10, 12.15 |
| X<br>A | WO 2014/014009 A1 (KURARAY CO., LTD.) 23 January 2014 (2014-01-23) claims 1, 2, paragraph [0088], tables 2, 8 | 11, 13-14, 16-17<br>1-10, 12, 15 |
| A | WO 2015/194611 A1 (SUMITOMO CHEMICAL CO., LTD.) 23 December 2015 (2015-12-23) | 1-17 |
| A | WO 2015/019614 A1 (KURARAY CO., LTD.) 12 February 2015 (2015-02-12) | 1-17 |
| A | JP 2016-778 A (KAO CORPORATION) 07 January 2016 (2016-01-07) | 1-17 |
| A | JP 3-5415 A (SHISEIDO CO., LTD.) 11 January 1991 (1991-01-11) | 1-17 |
| A | KR 10-2467405 B1 (SSMEDI. CO., HYUN, Jung Yub) 10 November 2022 (2022-11-10) | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/013188

C. DOCUMENTS CONSIDERED TO BE RELEVANT

| Category* | Citation of document, with indication, where appropriate, of the relevant passages | Relevant to claim No. |
|---|---|---|
| P, A | WO 2023/249012 A1 (KURARAY CO., LTD.) 28 December 2023 (2023-12-28) | 1-17 |
| E, A | WO 2024/075829 A1 (KURARAY CO., LTD.) 11 April 2024 (2024-04-11) | 1-17 |

Form PCT/ISA/210 (second sheet) (July 2022)

**INTERNATIONAL SEARCH REPORT**
**Information on patent family members**

International application No.
**PCT/JP2024/013188**

| Patent document cited in search report | Publication date (day/month/year) | Patent family member(s) | Publication date (day/month/year) |
| --- | --- | --- | --- |
| WO 2018/116885 A1 | 28 June 2018 | TW 201831526 A | |
| WO 2014/014009 A1 | 23 January 2014 | US 2015/0191558 A1<br>claims 1-3, paragraph [0107], tables 2, 8<br>EP 2876116 A1<br>KR 10-2015-0032750 A<br>CN 104619730 A<br>TW 201412782 A | |
| WO 2015/194611 A1 | 23 December 2015 | CN 106459241 A<br>KR 10-2017-0028308 A<br>TW 201606002 A | |
| WO 2015/019614 A1 | 12 February 2015 | US 2016/0194412 A1<br>EP 3031830 A1<br>CN 105452308 A<br>KR 10-2016-0042042 A<br>TW 201512227 A | |
| JP 2016-778 A | 07 January 2016 | (Family: none) | |
| JP 3-5415 A | 11 January 1991 | (Family: none) | |
| KR 10-2467405 B1 | 10 November 2022 | (Family: none) | |
| WO 2023/249012 A1 | 28 December 2023 | (Family: none) | |
| WO 2024/075829 A1 | 11 April 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S53133252 A


### Non-patent literature cited in the description


- **KOBUNSHI KANKO KAI**. *Poval*, 1984, 246-249
- *Macromolecules*, 1977, vol. 10, 532